# EUROPEAN PATENT SPECIFICATION

(11) **EP 2 485 956 B1**
(45) Date of publication and mention of the grant of the patent: **02.04.2014**
(21) Application number: 10779590.8
(22) Date of filing: 22.09.2010
(51) Int. Cl.: B65D 33/25, B31B 19/90

(54) **ADDING MASS TO SLIDER END STOMPS WITH ULTRASONICS IN A RECLOSABLE PACKAGE**
HINZUFÜGEN VON MASSE ZU DEN ENDANSCHLÄGEN EINES SCHIEBEVERSCHLUSSES MIT ULTRASCHALL BEI EINER WIEDERVERSCHLIESSBAREN VERPACKUNG
AJOUT DE MASSE A DES BUTOIRS D'EXTREMITES OBTENUS PAR ULTRASONS POUR UN CURSEUR D'EMBALLAGE REFERMABLE

(30) Priority: 06.08.2010 US 852271; 08.10.2009 US 249812 P
(43) Date of publication of application: 15.08.2012
(73) Proprietor: Illinois Tool Works, Glenview, Illinois 60025 (US)
(72) Inventor: GRECO, Charles, Glenview, IL 60025 (US); KEITH, David, Glenview, IL 60025 (US); RUSSELL, Glyn, Glenview, IL 60025 (US); PLOURDE, Eric, Glenview, IL 60025 (US); MCCRACKEN, Kenny, E., Glenview, IL 60025 (US); WIHLBORG, Lars, Glenview, IL 60025 (US)
(74) Representative: Finnie, Peter John
(86) International application number: PCT/US2010/049790
(87) International publication number: WO 2011/043926

(56) References cited:
- WO-A1-02/00520
- WO-A1-98/06292
- US-A1- 2004 091 648

## Description

This application claims priority under 35 U.S.C. § 119(e) of provisional patent application serial number 1/249,812, filed on October 8, 2009.

### Field of the Disclosure

The present disclosure relates to a method and apparatus for adding mass to the slider zipper profile during the ultrasonic crush cycle in order to provide a rise in the slider zipper profile, thereby resulting in increased slider pull -off forces.

### Description of the Prior Art

In the prior art, it is well known to form slider end stomps on the profiles of a slider zipper by ultrasonically crushing the profile, typically near the end seals of the zipper, thereby forcing mass upward and providing a "stop"' to limit the travel of the slider during opening or closing of the zipper. However, sometimes a stop of increased strength is required, particularly with larger bags, to further assure that the slider does not travel beyond the ends of the zipper.

Prior art includes U.S. Patent No. 7,470,061 entitled "Method for Making Slider End Stops on Zippers for Reclosable Packaging" issued on December 30, 2008 to Plourde et al. In WO 98/06292, there is disclosed a process as set forth in the preamble of the accompanying claim 1.

### SUMMARY AND OBJECTS OF THE DISCLOSURE

It is therefore an object of the present disclosure to provide a method and apparatus for increasing the strength of a slider end slop or slider end stomp, whereby greater resistance is provided to pulling the slider from the ends of the zipper.

This and other objects are attained by the present disclosure by introducing an additional polyethylene mass, typically configured as a string, strip, strap or similar structure, butted atop the zipper profile at the ultrasonic (stomp- forming) station, thereby increasing the upw ards mass height or rise of the resulting end stomp. The additional polyethylene mass is introduced, welded and cut at the ultrasonic station. In some applications, this may achieve a zipper pull-off force (i.e., the force required to pull a slider from an end of the zipper) of 67N (15 pounds) or more.

According to the invention, there is provided a process as set forth in the accompanying claim 1.

### BRIEF DESCRIPTION OF THE DRAWINGS

Further objects and advantages of the disclosure will become apparent from the follow ing description and from the accompanying drawings, wherein: .
Figure 1 is a diagram of a prior art reclosable package, showing the typical location of end stomps.
Figure 2 is a diagram of a prior art end stomp.
Figure 3 is a plan view of the additional polyethylene string mass on a zipper profile, prior to ultrasonic forming.
Figure 4 is a perspective view showing a length of the additional polyethylene string mass being added or joined to a length of zipper material.
Figure 5 is a perspective view of the ultrasonic forming of the end stomps.
Figure 6 is a plan view of the length of zipper material and the length of additional polyethylene string mass after ultrasonic welding but prior to the cutting of the string mass.
Figure 7 is a plan vie showing the final zipper, including end stomps of both ends.
Figure 8 is a plan view of an embodiment of the method and apparatus wherein the additional material held in place by an anvil guide plate so that it may be applied perpendicularly to the length of zipper material.
Figure 9 is a plan view of the embodiment of the method and apparatus of Figure 8 wherein the length of zipper material is running through the guide plate.
Figure 10 is a plan view of the embodiment of the method and apparatus of Figure 8, illustrating the formation of an end stomp of the length of zipper material.
Figures 11-20 illustrate additional possible locations for the insertion of additional mass on a zipper profile.
Figures 21A-21D illustrate a slider initially provided with the additional mass for the zipper profile, and the sequence of steps for the installation thereof.
Figures 22A-22C illustrate alternative embodiments to the slider illustrated in Figures 21A-21D.
Figures 23 and 24 illustrate further alternative embodiments of the slider illustrated in Figures 21A-21D and 22A-22C, these allernatives illustrating that the material for the end stops or end stomps could be initially provided as separate pieces and attached to the slider.

### DETAILED DESCRIPTION OF THE PREFERRED EMBODIMENTS

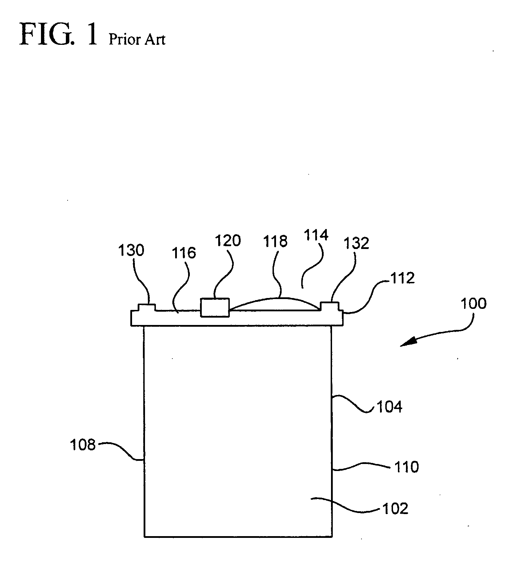

Referring now to the drawings in detail wherein like numerals indicate like elements throughout the several views, one sees that Figure 1 is a diagram of a prior art reclosable package 100. Reclosable package 100 includes co-extensive front and rear panels 102, 104, typically made of polymeric material and sealed at the bottom edge 106 and the two side edges 108, 110. Zipper 112 is attached to the resulting mouth 114 to make the package reclosable. Zipper 112 typically includes first and second interlocking profiles 116, 118 which are selectively opened by the slider 120 moving in a first direction (left in the illustration) thereby separating the first and second interlocking profiles 116, 118 and are selectively closed by the slider 120 moving in a second direction (right in the illustration) thereby interlocking the first and second interlocking profiles 116, 118.

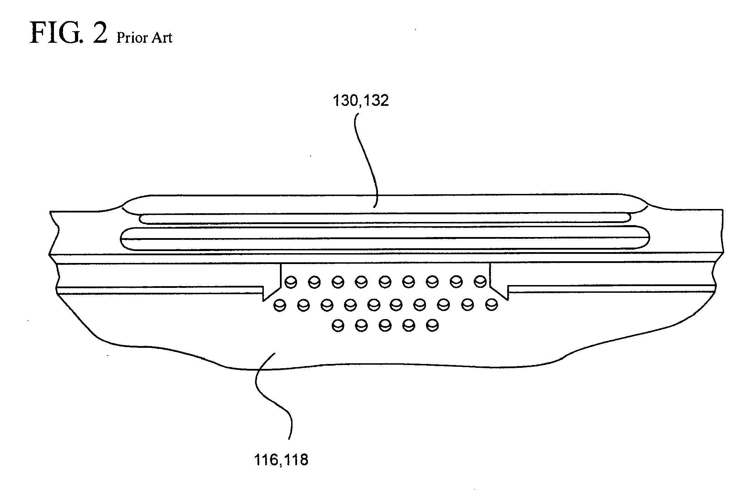

First and second end stomps 130, 132 are formed adjacent to the opposing ends of the zipper 112 in order to prevent the slider 120 from traveling (or being pulled) off of the ends of the zipper 112. As shown in Figure 2, first and second end stomps 130, 132 are typically formed by applying ultrasonic energy (or heat) to the zipper profiles 116, 118 thereby forcing material from the profiles 116, 118 upwardly. The material cools in place thereby forming the first and second end stomps 130, 132. While this method, apparatus and product are all well-developed and suitable for many applications, there are also applications in which increased resistance to slider pull-off is required. In other words, it is desired that the slider pull-off force be increased thereby preventing the slider from running up and partly over the end stomps 130, 132.

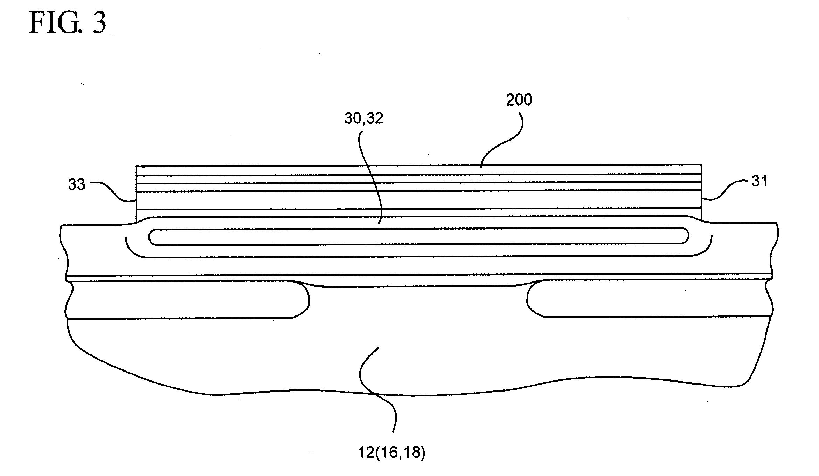

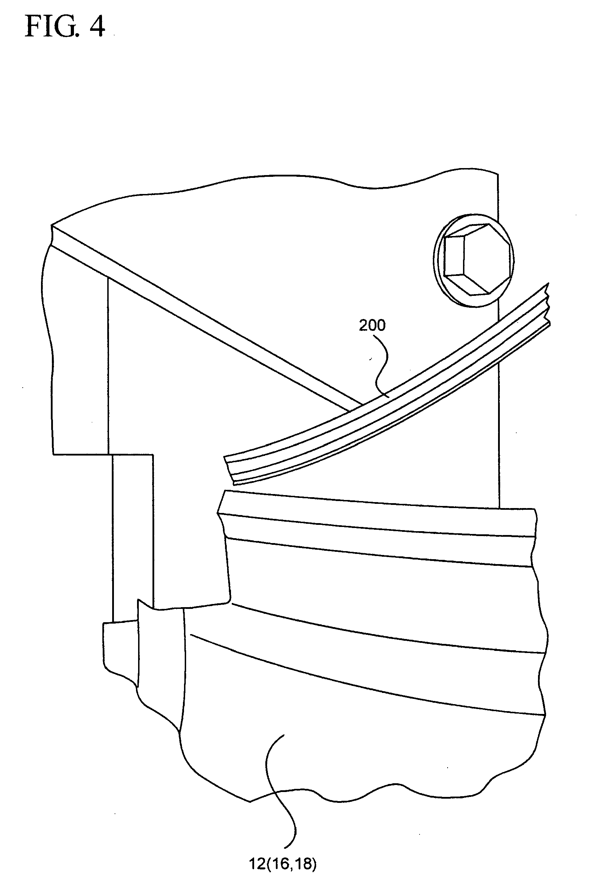

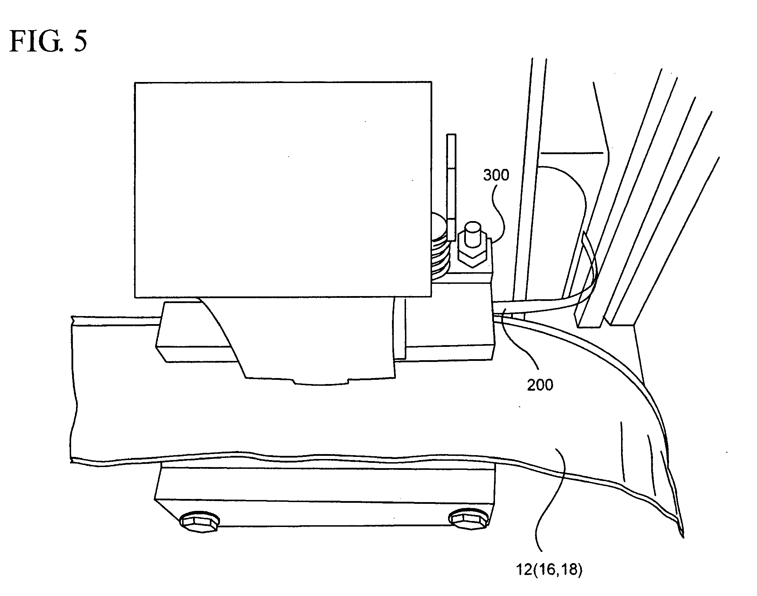

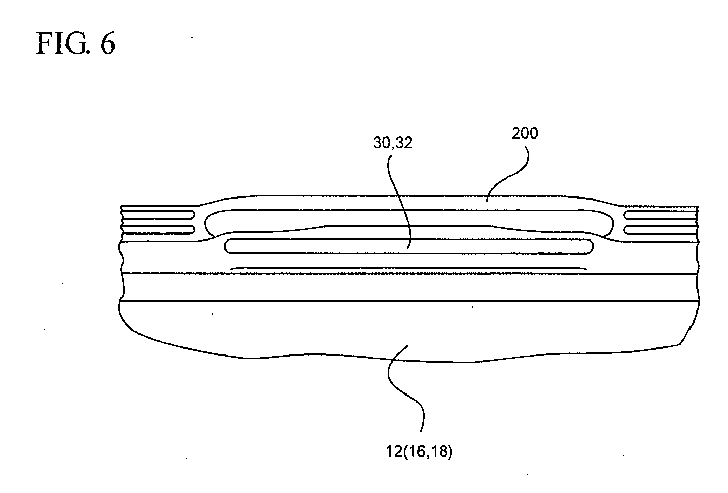

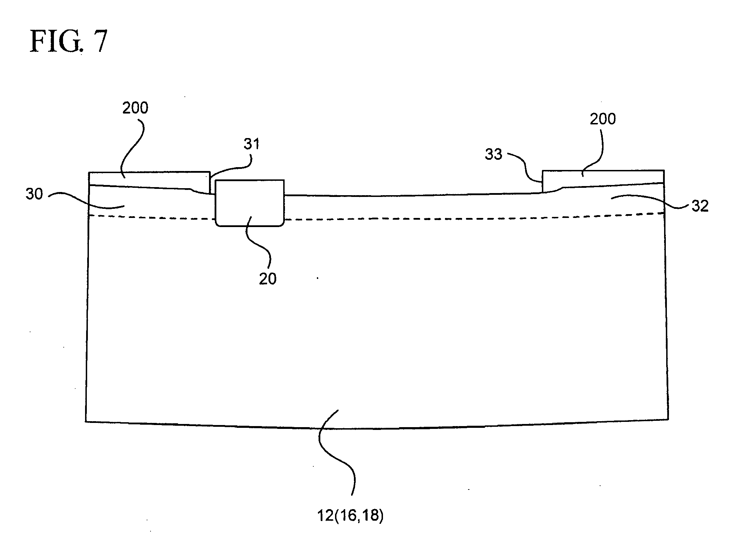

As shown in Figures 3-7, increased resistance to slider pull-off may be achieved by adding additional material, such as a string of additional mass 200 onto the top of first and second zipper profiles 16. 18 and ultrasonically forming end stomps 30, 32 from the material of both the zipper profiles 16, 18 and the string of additional mass 200. Prior to the addition of the string of additional mass 200 (or other additional mass), first and second zipper profiles 16, 18 are similar to first and second zipper profiles 116, 118. The string of additional mass 200 is typically polymeric material (such as, but not limited to, polyethylene) which is similar to the material of the zipper profiles 16, 18, in order to provide for the at least partial intermixing of the profile material and the additional mass during ultrasonic welding. Additionally, the string of additional mass 200 may be composed of recycled "regrind" of scrap material of the appropriate composition, such as polyethylene. As shown in Figure 4, the string of additional mass 200 is fed to a length of zipper material 12 (comprising first and second zipper profiles 16, 18) so that the string of additional mass 200 and the length of zipper material 12 are parallel. After the operation of ultrasonic welder 300 as shown in Figure 5, the string of additional material 200 is incorporated into end stomps 30, 32, with unwelded excess material from string 200 running along the top of zipper material 12 as shown in Figure 6, each stomp forming an end stomp for a separate zipper bag. As shown in Figure 3, the excess material from string 200 is cut away, thereby leaving the end stomps 30, 32 with a flat surface 31 or 33 for the slider 20 to strike against. The zipper 12 is then formed as shown in Figure 7 with the slider 20 confined to the zipper by end stomps 30, 32 of increased height and strength/

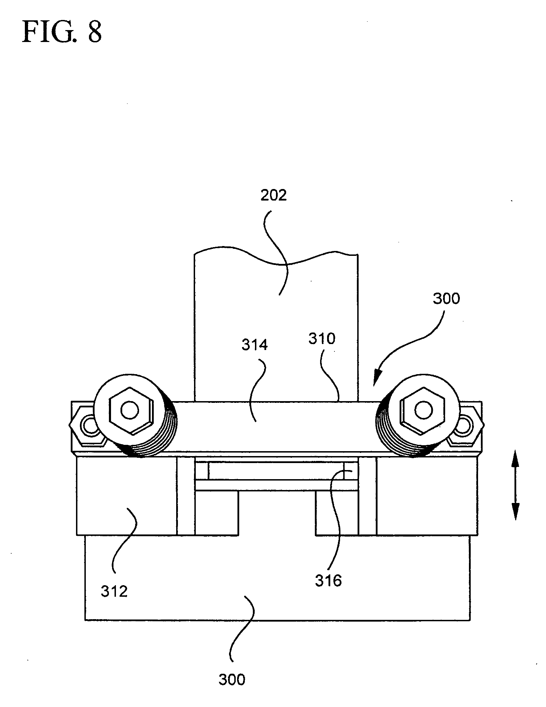

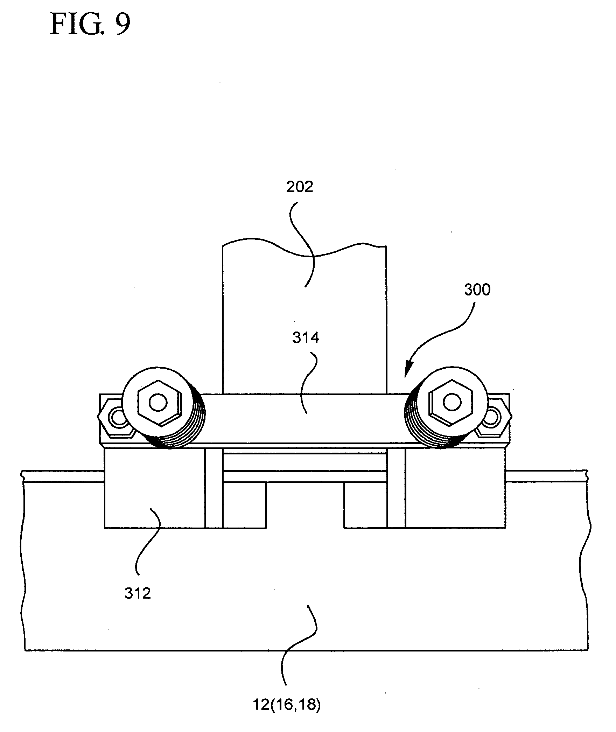

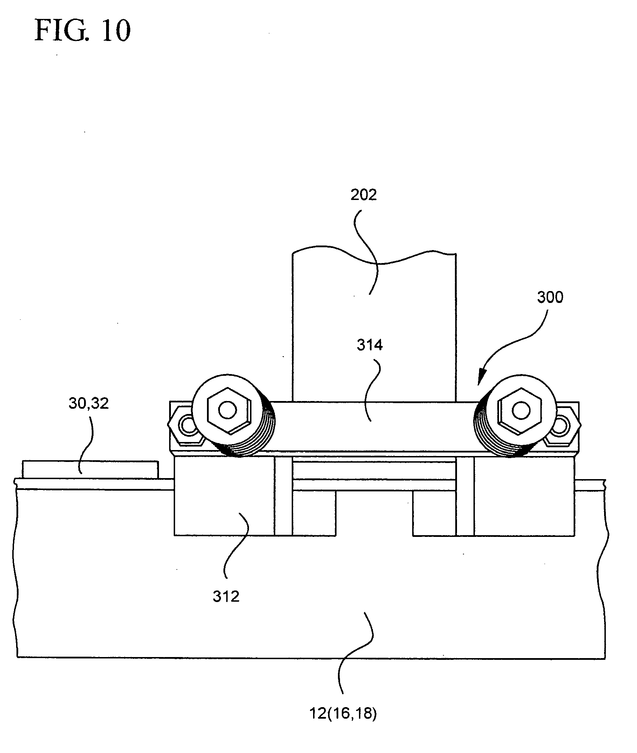

Figures 8-10 illustrate a method wherein band of additional mass 202 (formed of a material similar to that of the length of zipper 12, such as, but not limited to, polyethylene) is provided perpendicularly to the direction of travel of the length of zipper 12 and attached to the side of the length of zipper 12. Band of additional mass 202 enters a passageway 310 formed between the anvil guide plate 312 of ultrasonic (or thermal) welder 300 and a clamp 314. A cutter 316 is positioned below clamp 314. As shown in Figure 9, the zipper 12 travels perpendicularly to the direction of travel of band of additional mass 202. The band of additional mass 202 is engaged by clamp 314 and periodically moved above or below the profile in a piston-like motion to be positioned for cutting and ultrasonic welding so as to produce the spaced end stomps 30, 32 as shown in Figure 10. Then the clamp 314 will return to its original position (typically by upwardly vertical movement in the orientation of the figures). It is envisioned that this configuration may provide end stomps 30, 32 with as much as a fifteen pound pull-off force (i.e., the force required to move the slider 20 past the end stomps 30, 32). It is further envisioned that even greater pull-off forces could be achieved in some applications.

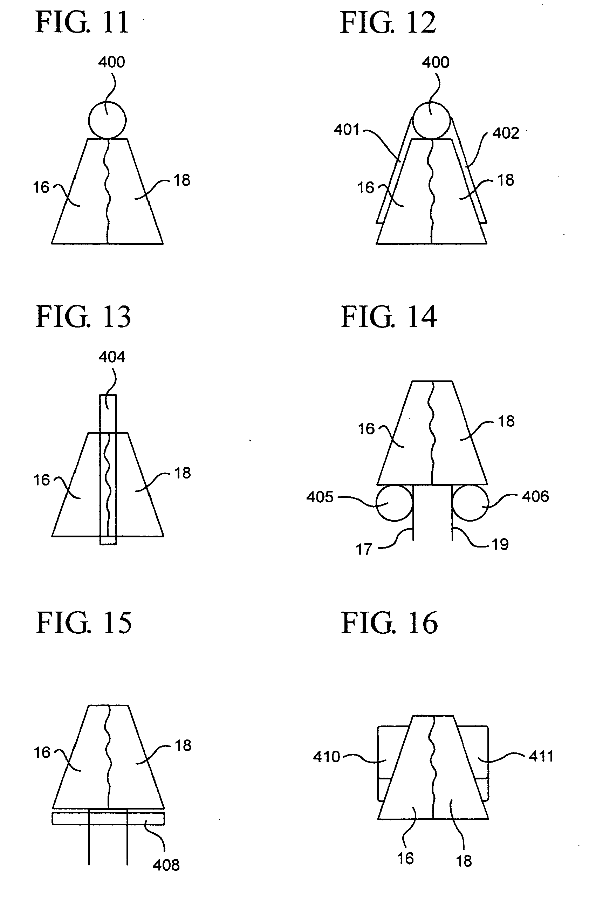

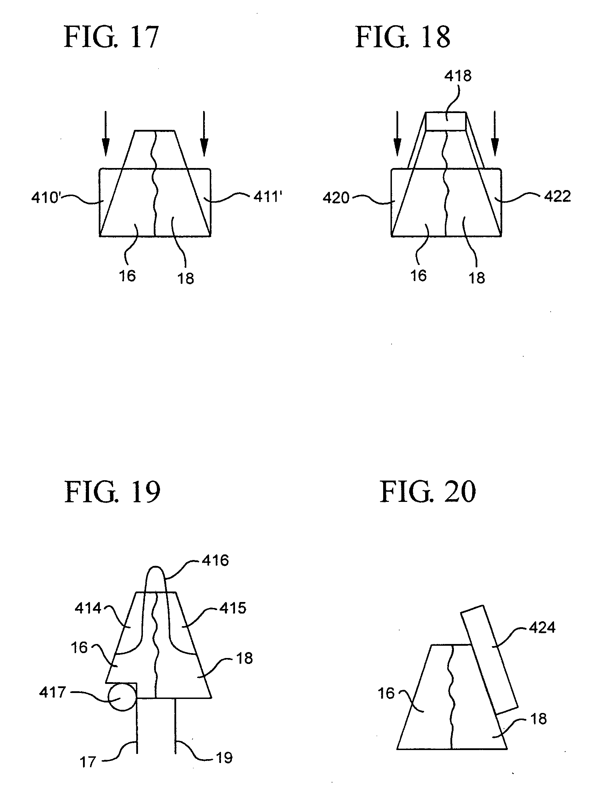

Figures 11-19 illustrate various possible placement of the additional material above the first and second zipper profiles 16, 18, shown in cross-section. Figure 11 illustrates the additional material configured as a cylindrical mass 400, positioned at the top of first and second zipper profiles 16, 18, similar to the configuration of string of additional mass 200 as illustrated in Figures 3-7. Figure 12 additionally illustrates polymer sheets 401, 402 extending from cylindrical mass 400 over the exterior faces of first and second zipper profiles 16, 18, to aid in the positioning of cylindrical mass 400 and further providing additional material. Polymer sheets 401, 402 may further provide an improved visual appearance if there is a difference in color or other visual characteristics between the material of the zipper profiles 16, 18 and the polymer sheets 401. 402. Figure 13 illustrates a polymer sheet 404 being placed between the interlocking elements of first and second zipper profiles 16, 18. Figure 14 illustrates first and second cylindrical masses 405, 406 (thereby typically requiring a second or additional length of additional material) being placed below zipper profiles 16, 18, positioned outwardly from respective first and second flanges 17, 19. Figure 15 illustrates a slab of additional material, positioned below first and second zipper profiles 16, 18. Figure 16 illustrates additional masses 410, 411 being placed flush to the exterior faces of first and second zipper profiles 16, 18, while Figure 17 illustrates the downward crushing, typically in combination with the application of heat or ultrasonic energy of the configuration of Figure 18 thereby resulting in additional masses 410', 411' forming part of an end stomp. Figure 18 is similar to Figure 17, except that additional mass 418 is added to the top of first and second zipper profiles 16, 18, while additional masses 420, 422 form part of an end stomp. Figure 19 illustrates a configuration wherein a single cylindrical mass 417 is placed under first zipper profile 16 and ultrasonic or thermal energy is applied to first and second zipper profiles 16, 18, so as to cause indentations 414, 415 and further causing material to be pushed upward into extrusion 416. Figure 20 illustrates a configuration wherein a planar or slab-like mass 424 is placed to the side of second zipper profile 18 and extends thereabove.

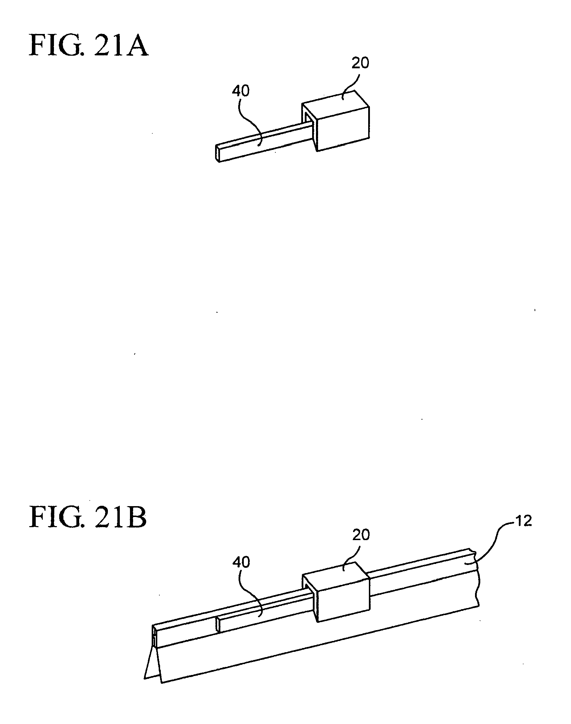

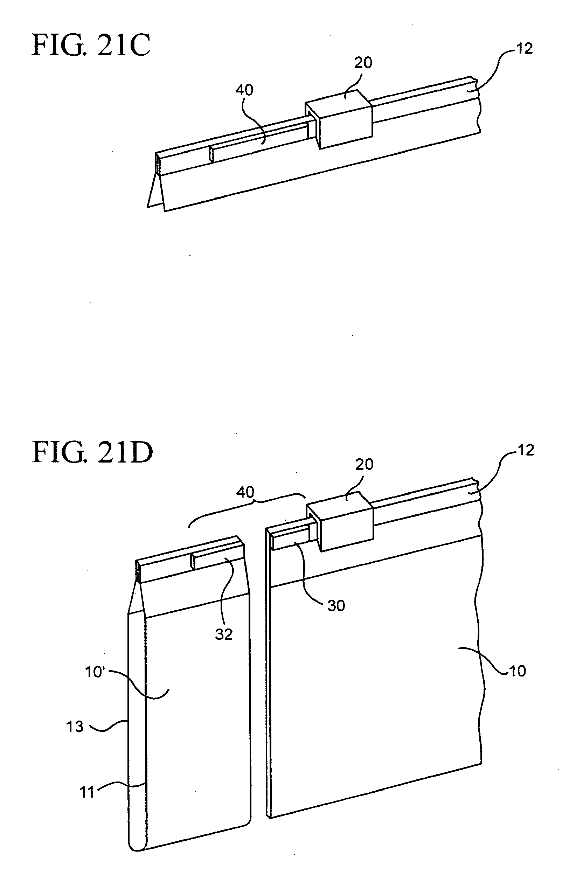

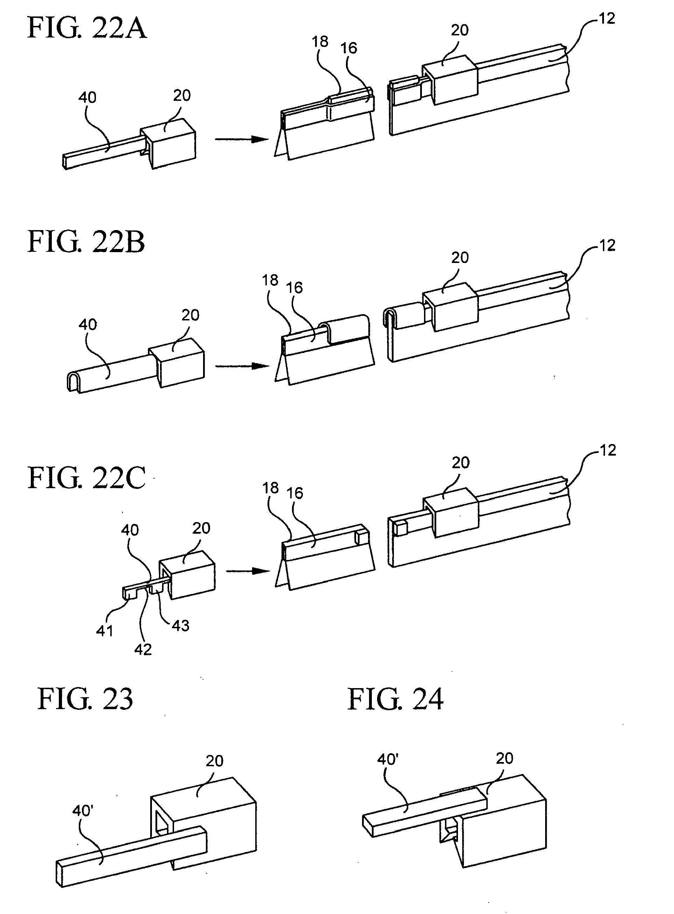

Figure 21A illustrates a slider 20 with end stomp material extension 40 extending therefrom. End stomp material extension 40 provides the additional material for an end stomp, and is typically initially provided as an integral part of slider 20 and may for example, be molded therewith. However, as illustrated in Figures 23 and 24, end stomp material extension 40' may be provided as a separate piece and subsequently sealed, glued, welded or otherwise to the top or side of slider 20. As shown in Figure 21B, the slider 20 with end stomp material extension 40 (or 40') is inserted onto zipper 12. The end stomp material extension 40 (or 40') is sealed, glued, welded or otherwise attached to the zipper 12 in a position so as to span the position of two adjacent reclosable packages 10, 10' (recalling that a typical reclosable slider package may include one slider 20 but requires two end stomps 30, 32). As show in Figure 21C, the end stomp material extension 40 (or 40') is separated from the slider 20, typically by cutting. As shown in Figure 21D, after the material to form the front and rear panels 11, 13 has been attached to the zipper 20 (which may be done before or after the insertion of the slider 20 onto the zipper 12) the cross cuts are formed to separate the adjacent reclosable packages 10, 10' and to divide the end stomp material extension 40 into end stomp 30 on reclosable package 10 and end stomp 32 on adjacent package 10'.

Figure 22A illustrates an embodiment wherein end stomp material extension 40 extends from a central portion of slider 20 between the first and second zipper profiles 16, 18. Figure 22B illustrates an embodiment wherein the end stomp material extension 40 has an inverted U-shaped cross section to wrap around the first and second zipper profiles 16, 18. Figure 22C illustrates an embodiment wherein end stop material extension 40 includes discrete end stomp elements 41, 43 attached by bridge 42 to form a key-type shape. As mentioned above, Figures 23 and 24 illustrate that the end stomp material extension 40' can be initially provided as separate material, and then sealed, glued, welded, or otherwise attached to the top or side of slider 20.

Thus the several aforementioned objects and advantages are most effectively attained. Although preferred embodiments of the invention have been disclosed and described in detail herein, it should be understood that this invention is in no sense limited thereby and its scope is to be determined by that of the appended claims.

## Claims

1. The process of:
providing a length of zipper material (12) for a reclosable package (100);
providing a length of additional material (200;400) adjacent to the length zipper material (12); and
forming end stomps (30,32) on the length of zipper material (12) from a portion of the length of zipper material (12) and a portion of the length of additional material (200;400), wherein the step of forming end stomps (30,32) is performed by ultrasonic or thermal welding;
**characterised in that** the length of additional material (200;400) is fed to be parallel to the length of zipper material (12).

2. The process of Claim 1 wherein the length of zipper material (12) is formed from polyethylene and the length of additional material (200;400) is formed from polyethylene.

3. The process of Claims 1 or 2 wherein the length of additional material (200;400;418) is provided on a top of the length of zipper material (12).

4. The process of Claim 3 wherein the length of additional material (400) further includes sheets (401,402) which extend over sides of the length of zipper material (12).

5. The process Claim 1 or 2 wherein the length of additional material (405;406;410;411;417;424) is provided at a first side of the length of zipper material (12).

6. The process of Claim 5 further wherein the length of additional material (405;406;410;411;417;424) is provided at a second side of the length of zipper material (12).

7. The process of Claims 1 or 2 wherein the length of additional material (400) is provided adjacent to and above the length of zipper material (12).

8. The process of Claims 1 or 2 wherein the length of additional material (405;406;408;417) is provided below the length of zipper material (12).

9. The process of any preceding Claim further including the step of cutting away the length of additional material (200;400) in locations where an end stomp (30,32) is not formed.

10. The process of any preceding Claim wherein the end stomps (30,32) rise above the length of zipper material (12).

## Patentansprüche

1. Verfahren zum:
Bereitstellen einer Länge Reißverschlussmaterial (12) für eine wiederverschließbare Verpackung (100);
Bereitstellen einer Länge von zusätzlichem Material (200; 400) an der Länge Reißverschlussmaterial (12) anliegend; und
Bilden von Endanschlägen (30, 32) an der Länge Reißverschlussmaterial (12) aus einem Teil der Länge Reißverschlussmaterial (12) und einem Teil der Länge von zusätzlichem Material (200; 400), wobei der Schritt des Bildens von Endanschlägen (30, 32) durch Ultraschall- oder Wärmeschweißen durchgeführt wird;
**dadurch gekennzeichnet, dass** die Länge von zusätzlichem Material (200; 400) so geführt wird, dass sie parallel zur Länge Reißverschlussmaterial (12) liegt.

2. Verfahren nach Anspruch 1, wobei die Länge Reißverschlussmaterial (12) aus Polyethylen gebildet ist und die Länge von zusätzlichem Material (200; 400) aus Polyethylen gebildet ist.

3. Verfahren nach Anspruch 1 oder 2, wobei die Länge von zusätzlichem Material (200; 400; 418) auf der Länge Reißverschlussmaterial (12) bereitgestellt ist.

4. Verfahren nach Anspruch 3, wobei die Länge von zusätzlichem Material (400) des Weiteren Platten (401, 402), die sich über die Seiten der Länge Reißverschlussmaterial (12) hinaus erstrecken, enthält.

5. Verfahren nach Anspruch 1 oder 2, wobei die Länge von zusätzlichem Material (405; 406; 410; 411; 417; 424) an einer ersten Seite der Länge Reißverschlussmaterial (12) bereitgestellt ist.

6. Verfahren nach Anspruch 5, wobei des Weiteren die Länge von zusätzlichem Material (405; 406; 410; 411; 417; 424) an einer zweiten Seite der Länge Reißverschlussmaterial (12) bereitgestellt ist.

7. Verfahren nach Anspruch 1 oder 2, wobei die Länge von zusätzlichem Material (400) an und über der Länge Reißverschlussmaterial (12) anliegend bereitgestellt wird.

8. Verfahren nach Anspruch 1 oder 2, wobei die Länge von zusätzlichem Material (405; 406; 408; 417) unter der Länge Reißverschlussmaterial (12) bereitgestellt ist.

9. Verfahren nach einem der vorhergehenden Ansprüche, des Weiteren den Schritt des Wegschneidens der Länge von zusätzlichem Material (200; 400) an Stellen, wo kein Endanschlag (30, 32) gebildet ist, umfassend.

10. Verfahren nach einem der vorhergehenden Ansprüche, wobei die Endanschläge (30, 32) sich über die Länge Reißverschlussmaterial (12) erheben.

## Revendications

1. Procédé comprenant :
prévoir une longueur de matériau de fermeture à glissière (12) pour un emballage refermable (100) ;
prévoir une longueur de matériau supplémentaire (200 ; 400) adjacente à la longueur de matériau de fermeture à glissière (12) ; et
former des butées d'extrémité (30, 32) sur la longueur de matériau de fermeture à glissière (12) à partir d'une partie de la longueur de matériau de fermeture à glissière (12) et d'une partie de la longueur de matériau supplémentaire (200 ; 400), l'étape de formation de butées d'extrémité (30, 32) étant réalisée par soudage par ultrasons ou thermosoudage ;
**caractérisé en ce que** la longueur de matériau supplémentaire (200 ; 400) est acheminée de façon à être parallèle à la longueur de matériau de fermeture à glissière (12).

2. Procédé selon la revendication 1, dans lequel la longueur de matériau de fermeture à glissière (12) est constituée de polyéthylène et la longueur de matériau supplémentaire (200 ; 400) est constituée de polyéthylène.

3. Procédé selon la revendication 1 ou 2, dans lequel la longueur de matériau supplémentaire (200 ; 400 ; 418) est placée sur une partie supérieure de la longueur de matériau de fermeture à glissière (12).

4. Procédé selon la revendication 3, dans lequel la longueur de matériau supplémentaire (400) comprend en outre des feuilles (401, 402) s'étendant sur les côtés de la longueur de matériau de fermeture à glissière (12).

5. Procédé selon la revendication 1 ou 2, dans lequel la longueur de matériau supplémentaire (405 ; 406 ; 410 ; 411 ; 417 ; 424) est placée d'un premier côté de la longueur de matériau de fermeture à glissière (12).

6. Procédé selon la revendication 5, dans lequel en outre la longueur de matériau supplémentaire (405 ; 406 ; 410 ; 411 ; 417 ; 424) est placée d'un second côté de la longueur de matériau de fermeture à glissière (12).

7. Procédé selon la revendication 1 ou 2, dans lequel la longueur de matériau supplémentaire (400) est placée en position adjacente à la longueur de matériau de fermeture à glissière (12) et au-dessus de celle-ci.

8. Procédé selon la revendication 1 ou 2, dans lequel la longueur de matériau supplémentaire (405 ; 406 ; 408 ; 417) est placée en dessous de la longueur de matériau de fermeture à glissière (12) .

9. Procédé selon l'une quelconque des revendications précédentes, comprenant en outre l'étape consistant à enlever par découpage la longueur de matériau supplémentaire (200 ; 400) aux endroits autres que ceux où une butée d'extrémité (30, 32) est formée.

10. Procédé selon l'une quelconque des revendications précédentes, dans lequel les butées d'extrémité (30, 32) s'élèvent au-dessus de la longueur de matériau de fermeture à glissière (12).
